# EUROPEAN PATENT APPLICATION

(11) **EP 2 196 652 A2**
(43) Date of publication of application: **16.06.2010**
(21) Application number: 09177606.2
(22) Date of filing: 01.12.2009
(51) Int. Cl.: F02C 7/057, F02C 7/143, F02C 9/16

(54) **Gas turbine base load control by chilling modulation**

(30) Priority: 11.12.2008 US 332378
(71) Applicant: General Electric Company, Schenectady, NY 12345 (US)
(72) Inventor: Feher, Peter, Suwanee, GA 30024 (US); Motakef, Abbas, Norcross, GA 30092 (US)
(74) Representative: Illingworth-Law, William Illingworth

(57) **Abstract**

A control system (100) for a base load output of a gas turbine engine. The control system (100) may include an inlet chilling coil system (210) for providing air to the gas turbine engine (110) at a desired temperature, a temperature control valve (260) in communication with the inlet chilling coil system (210), a temperature sensor (290) positioned about the gas turbine engine (110), and a temperature controller (270) in communication with the temperature control valve (260) and the temperature sensor (290). The temperature controller (270) modulates the temperature control valve (260) until the air provided to the gas turbine engine (110) by the inlet chilling coil system (210) reaches the desired temperature as sensed by the temperature sensor (290).

## Description

### TECHNICAL FIELD

The present application relates generally to gas turbine systems and more particularly relates to augmented base load control of a gas turbine by regulating the gas turbine inlet temperature via air inlet chilling systems.

### BACKGROUND OF THE INVENTION

The use of chilling systems with gas turbine systems may increase base load output by a significant percentage. Specifically, the power output of a gas turbine is in almost reverse proportion to the inlet air temperature. For example, a known gas turbine may produce only about 154 megawatts of power at about 83° Fahrenheit (about 28.3° Celsius) but about 171.2 megawatts of power at about 50° Fahrenheit (about 10° Celsius). Current chilling systems, however, generally maintain the gas turbine inlet temperature at a fixed temperature. As a result, there is a dead zone between the power output without the chilling system and the increased power output when the chilling system is engaged.

Attempts have been made to adjust manually the gas turbine inlet air temperature to achieve a desired power output. These manual efforts, however, resulted in a trial and error approach and generally are not in use. Further, such manual efforts cannot work under an Automatic Generation Control ("AGC") system. In operation, the AGC system determines the power generation required to meet the actual electric load demands and remotely allocates this generation among the regulated units, either locally and/or over a wide geography. As such, the dead zone may interfere with proper execution of the AGC system.

There is thus a desire for base load control of the gas turbine inlet air temperature to meet a desired power output once a gas turbine has reached its base load capacity at a specific ambient temperature. Such base load control preferably can be accomplished in an automated fashion.

### SUMMARY OF THE INVENTION

The present application thus provides a control system for a base load output of a gas turbine engine. The control system may include an inlet chilling coil system for providing air to the gas turbine engine at a desired temperature, a temperature control valve in communication with the inlet chilling coil system, a temperature sensor positioned about the gas turbine engine, and a temperature controller in communication with the temperature control valve and the temperature sensor. The temperature controller modulates the temperature control valve until the air provided to the gas turbine engine by the inlet chilling coil system reaches the desired temperature as sensed by the temperature sensor.

The present application provides for a method of reducing the output of a gas turbine engine having an inlet chilling system to a desired base load. The method may include the steps of modulating the angle of a number of inlet guide vanes until the angle reaches a predetermined angle, maintaining the angle of the inlet guide vanes at the angle, modulating a flow of water through the inlet chilling system until an output temperature reaches a predetermined temperature, turning the inlet chilling system off, and modulating the angle of the inlet guide vanes until the desired base load is reached.

The present application further provides a gas turbine system. The gas turbine system may include a compressor, a control system for modulating a base load having a temperature sensor positioned about the compressor, and an inlet chilling coil system for providing air to the compressor at a desired temperature. The inlet chilling coil system may include a temperature control valve in communication with the control system such that the control system modulates the temperature control valve until the air provided to the compressor by the inlet chilling coil system reaches the desired temperature as sensed by the temperature sensor.

These and other features of the present application will become apparent to one of ordinary skill in the art upon review of the following detailed description when taken in conjunction with the several drawings and the appended claims.

### BRIEF DESCRIPTION OF THE DRAWINGS

Fig. 1 is a schematic view of a gas turbine augmented base load control system as is described herein.

Fig. 2 illustrates the effects of IGV position and inlet air chilling on the simple cycle heat rate of a typical gas turbine at part load and base load conditions with and without a chilling system.

### DETAILED DESCRIPTION

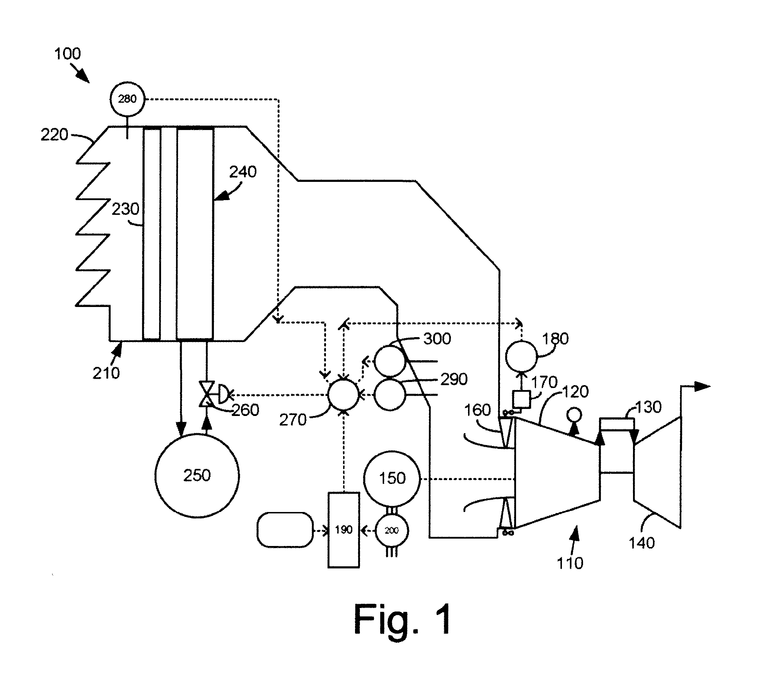

Referring now to the drawings, in which like numerals refer to like elements throughout the several views, Fig. 1 shows a schematic view of a gas turbine with an augmented base load control system 100 as is described herein. The control system 100 includes a gas turbine engine 110. As is known, the gas turbine engine 110 includes a compressor 120. The compressor 120 compresses an incoming flow of air. The gas turbine engine 110 further includes a number of combustors 130. The combustors 130 mix the incoming compressed airflow with an incoming fuel flow and ignites the mixture to produce hot combustion gases. The gas turbine engine 110 further includes a gas turbine 140. The turbine 140 turns the hot combustion gases into mechanical energy so as to drive the compressor 120 and an external load such as a generator 150 and the like. The gas turbine engine 110 may be a 7F turbine offered by General Electric Company of Schenectady, New York. Other configurations and types of gas turbine engines may be used herein. Multiple gas turbine engines and other types of turbines may be used together.

Base load control for existing gas turbine engines 110 may be possible through the use of a number of inlet guide vanes 160 positioned about the inlet of the compressor 120. The inlet guide vanes 160 may be maneuvered via an actuator 170. A transducer 180 may monitor the position of the inlet guide vanes ("IGV") 160. Any type of actuators 170 or transducers 180 may be used herein. The output of the gas turbine engine 110 thus may be modulated by changing the position of the inlet guide vanes 160 so as to vary the amount of the air entering into the compressor 120.

Specifically, the power output may be modulated to a specific set point. For example, the power output of the generator 150 may be monitored via a generator controller 190 in communication with a power transducer 200 associated with the generator 150 or other type of load. The generator controller 190 may be a conventional microprocessor based or a similar type of device. Based upon the desired load set point, the generator controller 190 may instruct the actuators 170 to alter the position of the inlet guide vanes 160 until the desired set point is reached. Other types of control systems and schemes may be used herein.

The gas turbine base load control system 100 also may include an inlet chilling system 210. The inlet chilling system 210 may include a weatherhood 220. The weatherhood 220 may prevent weather elements, such as rain, snow, etc., from entering the compressor 120. The inlet chilling system 210 also may include an inlet filter 230. The inlet air filter 230 also may prevent foreign objects and debris in the incoming air stream from entering the compressor 120.

The incoming air stream then may pass through an inlet chilling coil system 240. The inlet chilling coil system 240 may be in communication with a source of cold water 250 via a temperature control valve (TCV) 260. The water flow rate through the inlet chilling coil system 240 may be regulated by adjusting the position of the TCV 260. Varying the water flow rate through the inlet coil system 240 will vary the temperature of the air steam passing therethrough. Specifically, the incoming air passes through the inlet chilling coil system 240 and is cooled to a desired intake temperature before entering the compressor 120. The inlet chilling coil system 240 may include any type of heat exchange device therein.

The inlet chilling system 210 also may include a temperature controller 270. The temperature controller 270 may be a conventional microprocessor or the like. The temperature controller 270 may be in communication with an intake system temperature sensor 280. The intake system temperature sensor 280 may be positioned upstream of the inlet chilling coil system 240 so as to determine the temperature of the incoming airflow. The temperature controller 270 also may be in communication with a compressor inlet temperature sensor 290. The compressor inlet temperature sensor 290 may be positioned upstream of the compressor 120. The compressor inlet temperature sensor 290 may determine the temperature of the airflow as the airflow leaves the inlet chilling coil system 240 and enters the compressor 120. Likewise, the temperature controller 270 may be in communication with a humidity sensor 300. The humidity sensor 300 also senses the humidity of the airflow leaving the inlet chilling coil system 240 and entering the compressor 120.

The temperature controller 270 also may be in communication with the generator controller 190 so as to determine the load on the gas turbine engine 110 in general and the generator 150 in specific. The temperature controller 270 thus may modulate the temperature control valve 260 based upon the sensed temperatures, humidity, load, and other types of data and based upon the temperature/load commands as described below.

In use, the gas turbine base load controller system 100 may begin at base load, *i.e.,* at full load, with the inlet chilling system 210 operating to maintain the compressor inlet air temperature at a fixed temperature, generally about 50° Fahrenheit (about 10° Celsius). As such, the inlet temperature at the compressor 120 may be initially set by the temperature controller 270 to be at a minimum temperature (MinT). Likewise, the inlet guide vanes 160 may be set to a base load position.

In order to reduce the output of the gas turbine engine 110, the temperature controller 270 may first reduce the angle of the inlet guide vanes 160 until the angle is greater than or equal to the "best heat rate" inlet guide vane angle (BHIGV) less an inlet guide vane angle dead band (DBA). The BHIGV is a compressor inlet guide vane angle position at which the heat rate of the compressor 120 is at a minimum when it reaches the base load condition. The "dead band" inlet guide vane angle (DBA) offset is required for avoiding cycling (typically about 2-3°).

Once the inlet guide vanes 160 are positioned at BHIGV - DB, the temperature controller 270 may start raising the compressor inlet temperature by reducing the chilled water flow through the inlet chilling coil system 240 by gradually closing the TCV 260 until the generator power output equals the AGC issued demand set point. Similarly, any raise in demand may be met by the temperature controller 270 lowering the compressor inlet air temperature via modulation of the TCV 260.

Once the regulated compressor inlet temperature starts to approach the ambient temperature needed to meet the AGC demand set point, the inlet chilling system 210 may be turned off. Further modulation of the inlet guide vanes 160 then may be performed if further load reductions are desired.

The gas turbine base load control system 100 thus allows the output of the gas turbine engine 110 to be modulated automatically via the inlet chilling system 210 in the usually "dead" base load range. The output can be set higher than the base load without the inlet chilling system 210 and lower than the base load with the inlet chilling system 210 and the inlet air at the compressor 120 at a minimum typically at about 50° Fahrenheit (about 10° Celsius).

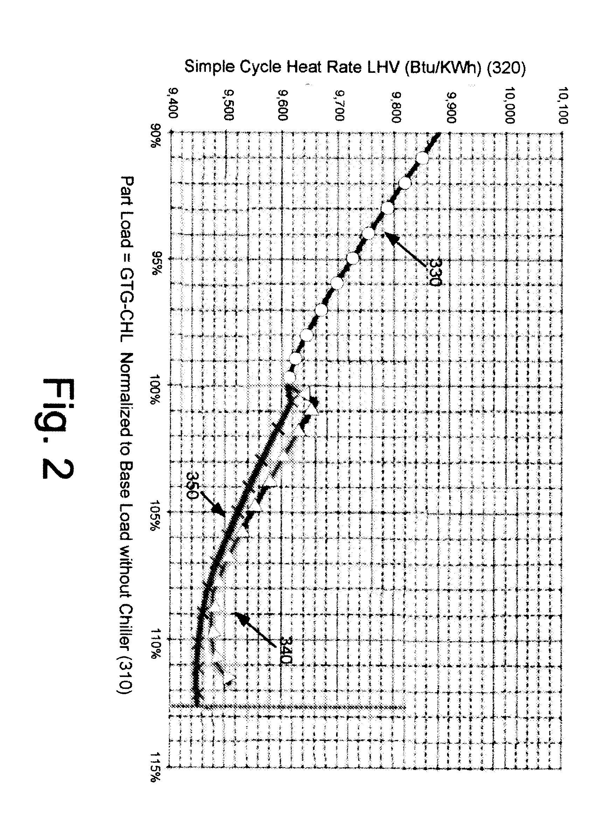

Fig. 2 illustrates the effects of the IGV position and inlet air chilling on the simple cycle heat rate of the gas turbine 110 at various loads. The x-axis 310 represents the net generator power output normalized to the base load capacity without the chilling system 210. The y-axis 320 represents the gas turbine heat rate operating in a simple cycle.

A data series 330 plots the normalized power output of the generator 150 on the x-axis 310 verses the gas turbine heat rate on the y-axis 320 when the position of the compressor IGV 160 is adjusted to meet the power demand. As is shown, the gas turbine efficiency (heat rate) improves as the IGV 160 opens further to meet an increase on demand.

A data series 340 plots the normalized power output of the generator 150 on the x-axis 310 verses the gas turbine heat rate on the y-axis 320 when the chilling system 210 is in operation to maintain the inlet air temperature of compressor 120 at a constant value of typical about 50 degrees Fahrenheit (about 10 degrees Celsius) while the position of the IGV 160 is regulated to meet the load demand on the generator 150.

A data series 350 plots the normalized power output of the generator 150 on the x-axis 310 verses the gas turbine heat rate on the y-axis 320 when the position of IGV 160 is maintained constant at BHIGV - DB and the inlet air temperature of compressor 120 is adjusted automatically the by base load control system 100 to meet the load demand on the generator 150. As it is shown, the gas turbine heat rate continuously and steadily reduces across the entire "dead band" contrary to heat rate changes of the data series 340 where the inlet temperature is kept constant.

It should be apparent that the foregoing relates only to certain embodiments of the present application and that numerous changes and modifications may be made herein by one of ordinary skill in the art without departing from the general spirit and scope of the invention as defined by the following claims and the equivalents thereof.
Aspects of the present invention are defined in the following numbered clauses:
1. A control system for a base load output of a gas turbine engine, comprising:
   an inlet chilling coil system for providing air to the gas turbine engine at a desired temperature;
   a temperature control valve in communication with the inlet chilling coil system;
   a temperature sensor positioned about the gas turbine engine; and
   a temperature controller in communication with the temperature control valve and the temperature sensor;
   wherein the temperature controller modulates the temperature control valve until the air provided to the gas turbine engine by the inlet chilling coil system reaches the desired temperature as sensed by the temperature sensor.
2. The control system of clause 1, wherein the inlet chilling coil system comprises a source of cool water in communication therewith.
3. The control system of clause 1, wherein the inlet chilling coil system comprises a filter.
4. The control system of clause 1, further comprising an inlet chilling system temperature sensor positioned upstream of the inlet chilling coil system and in communication with the temperature controller.
5. The control system of clause 1, wherein the temperature sensor comprises a compressor temperature sensor.
6. The control system of clause 1, further comprising a humidity sensor positioned upstream of the gas turbine engine and in communication with the temperature controller.
7. The control system of clause 1, further comprising a generator controller in communication with the gas turbine engine and the temperature controller.
8. A method of reducing the output of a gas turbine engine having an inlet chilling system to a desired base load, comprising:
   modulating the angle of a plurality of inlet guide vanes until the angle reaches a predetermined angle;
   maintaining the angle of the plurality of inlet guide vanes at the predetermined angle;
   modulating a flow of water through the inlet chilling system until an output temperature reaches a predetermined temperature;
   turning the inlet chilling system off; and
   modulating the angle of the plurality of inlet guide vanes until the desired base load is reached.
9. The method of clause 8, further comprising operating the gas turbine engine at the desired base load with the inlet chilling system on.
10. The method of clause 8, wherein the step of modulating the angle of a plurality of inlet guide vanes until the angle reaches a predetermined angle comprises modulating the angle of the plurality of inlet guide vanes until the angle is greater than or equal to a best heat rate angle minus a dead band inlet guide vane angle.
11. The method of clause 10, wherein the best heat rate angle comprises an angle of a minimum compressor heat rate.
12. The method of clause 11, wherein the dead band inlet guide vane angle comprises about 2-3°.
13. The method of clause 8, wherein the predetermined temperature comprises a minimum chilling system temperature plus a dead band inlet temperature.
14. The method of clause 8, further comprising reversing the steps for base load increases.
15. A gas turbine system, comprising:
   a compressor;
   a control system for modulating a base load output of the gas turbine system;
   the control system comprising a temperature sensor positioned about the compressor; and
   an inlet chilling coil system for providing air to the compressor at a desired temperature;
   the inlet chilling coil system comprising a temperature control valve in communication with the control system such that the control system modulates the temperature control valve until the air provided to the compressor by the inlet chilling coil system reaches the desired temperature as sensed by the temperature sensor.
16. The gas turbine system of clause 15, wherein the inlet chilling coil system comprises a source of cool water in communication therewith.
17. The gas turbine system of clause 15, further comprising an inlet chilling system temperature sensor positioned upstream of the inlet chilling coil system and in communication with the control system.
18. The gas turbine system of clause 15, further comprising a humidity sensor positioned upstream of the compressor and in communication with the control system.
19. The gas turbine system of clause 15, further comprising a generator controller in communication with the control system.

## Claims

1. A control system (100) for a base load output of a gas turbine engine (110), comprising:
an inlet chilling coil system (210) for providing air to the gas turbine engine (110) at a desired temperature;
a temperature control valve (260) in communication with the inlet chilling coil system (210);
a temperature sensor (290) positioned about the gas turbine engine (110); and
a temperature controller (270) in communication with the temperature control valve (260) and the temperature sensor (290);
wherein the temperature controller (270) modulates the temperature control valve (260) until the air provided to the gas turbine engine (110) by the inlet chilling coil system (210) reaches the desired temperature as sensed by the temperature sensor (290).

2. The control system (100) of claim 1, wherein the inlet chilling coil system (210) comprises a source of cool water (250) in communication therewith.

3. The control system (100) of claim 1 or claim 2, wherein the inlet chilling coil system (210) comprises a filter (230).

4. The control system (100) of any one of the preceding claims, further comprising an inlet chilling system temperature sensor (280) positioned upstream of the inlet chilling coil system (210) and in communication with the temperature controller (270).

5. The control system (100) of any one of the preceding claims, wherein the temperature sensor (280) comprises a compressor temperature sensor (280).

6. The control system (100) of any one of the preceding claims, further comprising a humidity sensor (300) positioned upstream of the gas turbine engine (110) and in communication with the temperature controller (270).

7. The control system (100) of any one of the preceding claims, further comprising a generator controller (190) in communication with the gas turbine engine (110) and the temperature controller (270).

8. A method of reducing the output of a gas turbine engine (110) having an inlet chilling system (210) to a desired base load, comprising:
modulating the angle of a plurality of inlet guide vanes (160) until the angle reaches a predetermined angle;
maintaining the angle of the plurality of inlet guide vanes (160) at the predetermined angle;
modulating a flow of water through the inlet chilling system (210) until an output temperature reaches a predetermined temperature;
turning the inlet chilling system (210) off; and
modulating the angle of the plurality of inlet guide vanes (160) until the desired base load is reached.

9. The method of claim 8, further comprising operating the gas turbine engine (110) at the desired base load with the inlet chilling system (210) on.

10. The method of claim 8 or claim 9, wherein the step of modulating the angle of a plurality of inlet guide vanes (160) until the angle reaches a predetermined angle comprises modulating the angle of the plurality of inlet guide vanes (160) until the angle is greater than or equal to a best heat rate angle minus a dead band inlet guide vane angle.

11. The method of claim 10, wherein the best heat rate angle comprises an angle of a minimum compressor heat rate.

12. The method of claim 10 or claim 11, wherein the dead band inlet guide vane angle comprises about 2-3°.

13. The method of any one of claims 8 to 12, wherein the predetermined temperature comprises a minimum chilling system temperature plus a dead band inlet temperature.

14. The method of claim 13, further comprising reversing the steps for base load increases.

15. A gas turbine system, comprising:
a compressor;
a control system for modulating a base load output of the gas turbine system;
the control system comprising a temperature sensor positioned about the compressor; and
an inlet chilling coil system for providing air to the compressor at a desired temperature;
the inlet chilling coil system comprising a temperature control valve in communication with the control system such that the control system modulates the temperature control valve until the air provided to the compressor by the inlet chilling coil system reaches the desired temperature as sensed by the temperature sensor.
